# EUROPÄISCHE PATENTSCHRIFT

(11) **EP 2 519 401 B1**
(45) Veröffentlichungstag und Bekanntmachung des Hinweises auf die Patenterteilung: **06.03.2019**
(21) Anmeldenummer: 10800946.5
(22) Anmeldetag: 29.12.2010
(51) Int. Cl.: B29C 70/44, B29C 70/54, B29C 70/02

(54) **INFUSIONSVERFAHREN UND FLIESSHILFE**
INFUSION METHOD AND FLOW AID
PROCÉDÉ D'INFUSION ET ÉLÉMENT FACILITANT L'ÉCOULEMENT

(30) Priorität: 29.12.2009 US 290514 P; 29.12.2009 DE 102009060699
(43) Veröffentlichungstag der Anmeldung: 07.11.2012
(73) Patentinhaber: Airbus Operations GmbH, 21129 Hamburg (DE)
(72) Erfinder: HEIM, Clemens, 21684 Stade (DE); FIDEU, Paulin, 21682 Stade (DE); SEEGEL, Hauke, 21369 Nahrendorf (DE); HERRMANN, Axel, 21682 Stade (DE)
(74) Vertreter: LKGLOBAL Lorenz & Kopf PartG mbB Patentanwälte
(86) Internationale Anmeldenummer: PCT/EP2010/070829
(87) Internationale Veröffentlichungsnummer: WO 2011/080288

(56) Entgegenhaltungen:
- EP-A2- 1 484 165
- WO-A2-2007/040797
- WO-A2-2007/040797
- US-A1- 2003 211 194
- US-A1- 2003 227 107

## Beschreibung

Die Erfindung betrifft ein Infusionsverfahren nach dem Oberbegriff des Patentanspruchs 1 und eine Fließhilfe nach dem Oberbegriff des Patentanspruchs 8.

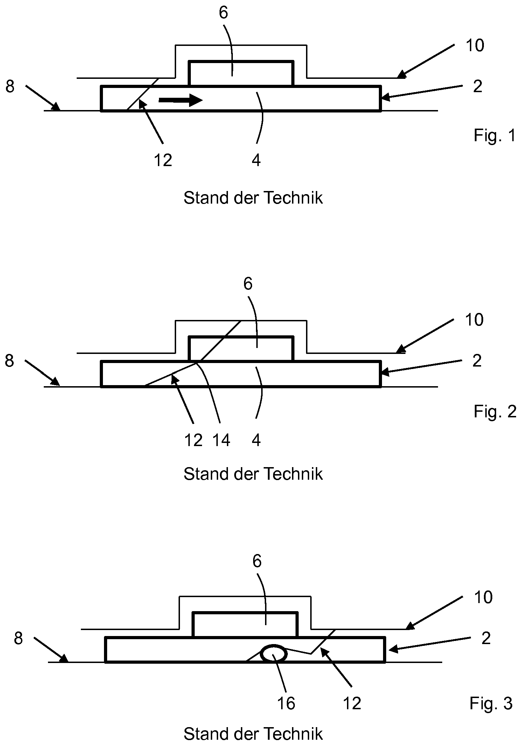

Ein prinzipieller Aufbau derartiger Infusions- bzw. Vakuuminfusionsverfahren ist in den Figuren 1 bis 3 gezeigt. Ein mit einem Harz zu infiltrierendes Bauteil 2 aus einem Grundlaminat 4 und einem Zusatzlaminat 6, ist auf einem Werkzeug 8 abgelegt und von einer Fließhilfe 10 bedeckt. Die Laminate 4, 6 bestehen aus trockenen faserverstärkten Halbzeugen und sind als Gelege, Gewirke, Gewebe oder drgl. ausgeführt. Die Fließhilfe 10 dient zur gleichmäßigen Verteilung des Harzes in Längs- und Breitenrichtung des Bauteils 2 und ist beispielsweise ein Gewirk oder ein Gitter aus beispielsweise Polyester oder Polyamid. Das Bauteil 2 und die Fließhilfe 18 werden in einem Vakuumsack (nicht gezeigt) eingepackt, der sich auf dem Werkzeug 8 dichtend abstützt und der über eine nicht gezeigte werkzeugnahen Absaugung evakuiert wird. Das Harz wird über einen nicht gezeigten werkzeugfernen Anguss der Fließhilfe zugeführt. Gemäß der durch den Pfeil angedeuteten Fließrichtung des Harzes sind der Anguss in einem linken Bauteilbereich und die Absaugung in einem rechten Bauteilbereich angeordnet.

Beim Zuführen des Harzes bildet sich eine Fließfront 12 aus, die das Grundlaminat 4 in Dickenrichtung von links nach rechts durchtränkt, wobei das Harz in der Nähe der Fließhilfe 10 dem Harz in der Nähe des Werkzeugs 8 etwas vorauseilt, so dass die Fließfront 12 in Dickenrichtung schräg ausgebildet ist. Im Bereich des Zusatzlaminates 6 liegt eine Bauteil- bzw. Laminatdickenveränderung vor, die, wie in Figur 2 gezeigt, dazu führt, dass das Harz nicht mehr über den gesamten Querschnitt des Bauteils 2 stabil verteilt wird, sondern im fließhilfefernen Grundlaminat 4 stärker verzögert wird als im fließhilfenahen Zusatzlaminat 6, so dass quasi ein Knick 14 in der Fließfront 12 ausgebildet wird. Hierdurch besteht die Gefahr, dass, wie in Figur 3 gezeigt, sich nach dem Durchtränken des Zusatzlaminats 6 im Grundlaminat 4 unterhalb der Fließfront 12 ein Porenfeld 16 bildet, das die Qualität des herzustellenden Faserverbundbauteils 2 erheblich mindert.

Neben der Verwendung von getrennten bzw. separaten Fließhilfen, die auf dem Halbzeug bzw. dem Bauteil abgelegt werden, ist es aus der Anmeldung DE 10 2007 013 987 A1 der Anmelderin ebenfalls bekannt, die Fließhilfe in die Werkzeugoberfläche zu integrieren. Eine gleichmäßige, unabhängig von dem Querschnitt bzw. der Dicke des Halbzeuges stabile Verteilung des Harzes lässt sich jedoch auch mit dieser Lösung nicht sicher garantieren.

US 2003/211194 A1 beschreibt einen Aufbau zur Beeinflussung eines Harzfrontenverlaufs. Hierbei wird beispielsweise im Bereich von Bauteilverdickungen eine Absorptionsschicht positioniert, mittels der die Fließgeschwindigkeit verlangsamt wird.

WO 2007/040797A2 beschreibt ein RTM-Verfahren und einen entsprechenden Aufbau bei dem eine Vakuumfolie zur Beschleunigung der Fließgeschwindigkeit und somit zur Reduzierung der Infiltrationszeit von dem zu infiltrierenden Bauteil abschnittsweise abgehoben wird, sodass das Harz frei über das Bauteil fließen kann. Hierzu ist ein festes Außengehäuse vorgesehen, welches über der Vakuumfolie positioniert wird und zwischen seiner Gehäusewandung und der Vakuumfolie einen Vakuumraum zum Abheben der Vakuumfolie von dem Bauteil definiert. Daher wird die Fließgeschwindigkeit durch einen externen Vakuumraum gesteuert.

Aufgabe der vorliegenden Erfindung ist es, ein Infusionsverfahren und eine Fließhilfe zur Herstellung eines faserverstärkten Verbundbauteils zu schaffen, die die vorgenannten Nachteile beseitigen und eine gleichmäßige bzw. stabile Tränkung der Bauteilfasern in Dickenrichtung ermöglichen.

Diese Aufgabe wird gelöst durch ein Infusionsverfahren mit den Merkmalen des Patentanspruchs 1 und durch eine Fließhilfe mit den Merkmalen des Patentanspruchs 8.

Die Erfindung wird definiert durch die Gegenstände der unabhängigen Ansprüche.

Bei einem erfindungsgemäßen Infusionsverfahren zur Herstellung eines faserverstärkten Verbundbauteils wird eine Fließhilfe zur Verteilung eines Matrixmaterials auf dem zu infiltrierenden Verbundbauteil abgelegt. Erfindungsgemäß wird die Fließgeschwindigkeit des Matrixmaterials innerhalb der Fließhilfe zumindest abschnittsweise verändert, so dass der gesamte Infusionsprozess stabilisiert und die Gefahr von Poreneinschlüssen minimiert bzw. beseitigt wird. Die Ausbreitung der Fließfront kann mittels einem Körperabschnitt gezielt eingestellt werden, so dass die vorher beschriebene Knickbildung innerhalb der Fließfront kontrolliert werden kann. Erfindungsgemäß löst sich der Körperabschnitt dabei nach einer bestimmten Zeit auf.

Bei einem bevorzugten Ausführungsbeispiel wird die Fließgeschwindigkeit im Bereich eines dickwandigen Bauteilabschnittes verlangsamt. Hierdurch ist es möglich, eine gleichmäßige Harzverteilung über die gesamte Dicke des Bauteils zu erreichen, da das Matrixmaterial mit zumindest reduzierter Geschwindigkeit über die Bauteiloberfläche geführt wird. Ebenso kann die Fließgeschwindigkeit bei komplexen Bauteilstrukturen bzw. -abschnitten zumindest verlangsamt werden, um eine vollständige und stabile Tränkung dieser Bauteilabschnitte zu erreichen. Bei einem anderen Ausführungsbeispiel wird die Fließgeschwindigkeit des Matrixmaterials innerhalb der Fließhilfe abschnittsweise erhöht, so dass beispielsweise das Matrixmaterial schneller über dünnwandige Bauteilabschnitte geführt wird, da diese in Dickenrichtung schneller getränkt werden können.

Bei Übergängen von dick- auf dünnwandige Bauteilabschnitte wird die Fließgeschwindigkeit bevorzugterweise im hinteren Bereich des dickwandigen Bauteilabschnittes, d.h. nahe des Übergangs, zumindest verlangsamt, so dass sichergestellt sein kann, dass der gesamte Bauteilabschnitt gleichmäßig mit dem Matrixmaterial durchtränkt wird.

Insbesondere ist es vorteilhaft, wenn das Matrixmaterial in der Fließhilfe temporär gestoppt wird. Hierdurch wird erreicht, dass nur eine Tränkung in Dickenrichtung für einen bestimmten Zeitraum möglich ist und das Matrixmaterial erst dann weiter über das Bauteil geführt wird, wenn dieses bis zu einem gewissen Maß in Dickenrichtung durchtränkt ist. Dabei lässt sich der Aufbau des Infusionsverfahrens vereinfachen, wenn die Fließhilfe einen Körperabschnitt aufweist, der als eine Art Barriere für das Matrixmaterial dient und nach einer bestimmten Zeit von dem Matrixmaterial selbsttätig aufgelöst wird.

Bei einer anderen Ausführungsform wird der Körperabschnitt durch Bestrahlung mit einer externen Energiequelle aufgelöst. Beispiele sind elektromagnetische Strahlung wie UV-Strahlung, IR-Strahlung und Wärmestrahlung. D.h. der Körperabschnitt ist resistent gegenüber dem Matrixmaterial. Diese Variante hat den Vorteil, dass die Auflösung des Körperabschnitts nicht vorbestimmt werden muss und somit im laufenden Prozess nach dem Aufbau auf den Verlauf der Fließfront gezielt Einfluss genommen werden kann. Ebenso können durch gezielte Bestrahlung nur einzelne Bereiche des Körperabschnitts individuell gesteuert werden. Insofern erlaubt dieses Ausführungsbeispiel gewisse Toleranzen bei der Auslegung und Positionierung des Körperabschnitts.

Ein weiteres Ausführungsbeispiel sieht vor, dass die Auflösung des Körperabschnitts durch Bestrahlung mit einer externen Energiequelle initiiert und dann durch das Matrixmaterial fortgeführt wird. Hierdurch kann der Beginn der Auflösung gezielt bestimmt werden und dann die Auflösung an sich selbsttätig ablaufen.

Eine erfindungsgemäße Fließhilfe für ein Infusionsverfahren weist zumindest einen Körperabschnitt zur Veränderung der Fließgeschwindigkeit des Matrixmaterials innerhalb der Fließhilfe auf. Der Vorteil einer solchen Fließhilfe besteht insbesondere in der einfachen Handhabung und Positionierung und der Stabilisierung des Gesamtprozesses durch eine Minimierung der Gefahr von Poreneinschlüssen, unabhängig welches Infusionsverfahren gewählt wird. Ein manuelles aufwendiges Stückeln der Fließhilfe und entsprechendes Drapieren wird vermieden, so dass insbesondere komplexe Bauteile einfacher und kostengünstiger hergestellt werden können.

Bei einem bevorzugten Ausführungsbeispiel ist der Körperabschnitt als eine Barriere ausgebildet, die das Matrixmaterial temporär stoppt. Diese temporäre Stoppfunktion kann dadurch erreicht werden, dass der Körperabschnitt nach einer bestimmten Zeit von zum Beispiel dem Matrixmaterial aufgelöst wird.

Bei einer Variante wird der Körperabschnitt von Fäden gebildet, die beispielsweise aus einem Kunststoff der Gruppe Polyethersulfon (PES) hergestellt sind.

Sonstige vorteilhafte Ausführungsbeispiele der vorliegenden Erfindung sind Gegenstand weiterer Unteransprüche.

Im Folgenden werden bevorzugte Ausführungsbeispiele der Erfindung anhand schematischer Darstellungen näher erläutert. Es zeigen:
Figuren 1 bis 3 einen Aufbau und Verfahrensschritte eines bekannten Infusionsprozesses, und
Figuren 4 und 8 einen Aufbau und Verfahrensschritte eines erfindungsgemäßen Infusionsprozesses.

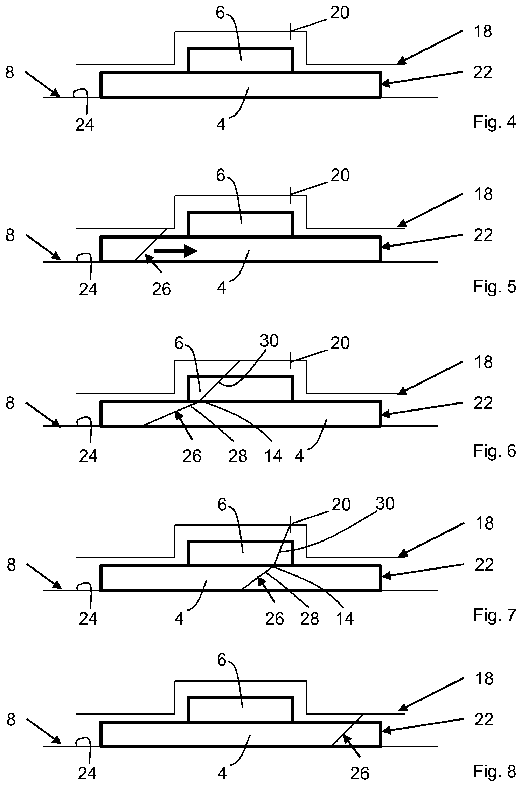

Bei einem bevorzugten Infusionsprozess wird gemäß Figur 4 eine Fließhilfe 18 verwendet, die einen integralen Körperabschnitt 20 aufweist, der als eine temporäre Barriere für ein durch die Fließhilfe 18 fließendes Matrixmaterial bzw. Harz dient. Das Grundmaterial der Fließhilfe 18 ist zum Beispiel ein Polyester-Gewirk. Der Körperabschnitt 20 wird hingegen von integralen Fäden, beispielsweise aus Polyethersulfon (PES) gebildet. Diese haben die Eigenschaft, dass sie nach einer bestimmen und einstellbaren Zeit von dem anliegenden Harz, beispielsweise einem Epoxid- oder Polyesterharz der Klasse RTM 6, aufgelöst werden (s. Figur 8), so dass sich das Harz ungehindert weiter innerhalb der Fließhilfe 18 ausbreiten kann. Die Zeit, nach der sich der Körperabschnitt 20 aufgelöst, wird im Vorfeld exakt bestimmt. Beeinflussen lässt sich dies insbesondere durch die Anzahl, der Dicke sowie der Anordnung bzw. Ausrichtung der Fäden, der Materialien und der Harztemperatur.

Im Folgenden wird ein Infusionsverfahren unter Anwendung der erfindungsgemäßen Fließhilfe 18 erläutert. Dabei wird sich jedoch nur auf die wesentlichen Merkmale bezogen und allgemein bekannte, den Aufbau eines Infusionsverfahrens betreffende Aspekte werden nicht näher erläutert. So sind zum Beispiel Abreißgewebe, Vakuumsack, Positionierung des Angusses bzw. der Absaugung, und Belüftungsgewebe nicht gezeigt und teilweise auch nicht weiter erwähnt. Dies heißt jedoch nicht, dass die erfindungsgemäße Fließhilfe 18 nur in dem hier beschriebenen Aufbau eigesetzt werden kann. Die nicht näher erwähnten Aspekte bzw. Merkmale eines Aufbaus für ein Infusionsverfahren sind jedoch Selbstverständlichkeiten. Ebenso ist es eine Selbstverständlichkeit die erfindungsgemäße Fließhilfe 18 nicht nur oberhalb eines mit dem Harz zu tränkendem Bauteils 22 anzuordnen, sondern auch unterhalb, d.h. zwischen dem Bauteil 22 und einer das Bauteil 22 aufnehmenden Werkzeugoberfläche 24. Beispielhafte Infusionstechniken sind Resin-Transfer-Molding (RTM), Vacuum-Assisted-Process (VAP), Vacuum-Resin-Infusion (VARI) und dergleichen.

Zu Beginn des Infusionsverfahrens wird, wie in Figur 4 gezeigt, ein mit dem Harz zu tränkendes Bauteil 22 auf einer Werkzeugoberfläche 24 positioniert. Es hat beispielsweise zumindest ein textiles Halbzeug aus trockenen Fasern als Grundlaminat 4 und zumindest ein zweites textiles Halbzeug aus trockenen Fasern als Zusatzlaminat 6, welches mittig auf dem Grundlaminat 4 abgelegt ist. Die Laminate 4, 6 bzw. Halbzeuge bestehen beispielsweise aus Kohlenstoff- oder Glasfasern, die zu einem Gelege, einem Gewirk, einem Gewebe oder dergleichen orientiert sind.

Nach der Positionierung des Bauteils 22 auf der Werkzeugoberfläche 24 wird auf diesem die erfindungsgemäße Fließhilfe 18 abgelegt, so dass das Bauteil 22 zwischen der Werkzeugoberfläche 24 und der Fließhilfe 18 angeordnet ist.

Anschließend wird die vorgeschriebene Anordnung in einen Vakuumsack eingepackt und evakuiert, wobei gemäß dem in Figur 5 gezeigten und die Fließrichtung des Harzes andeutenden Pfeil der Harzanguss in einem linken und die Absaugung in einem rechten Bauteilbereich erfolgt. Dann wird über die Fließhilfe 18 das Harz dem Bauteil 22 zugeführt, wobei das Bauteil 22 in Dickenrichtung von dem Harz durchtränkt wird und sich eine Fließfront 26 ausbreitet, die sich gemäß der Fließrichtung des Harzes in der Fließhilfe 18 von links nach rechts, also hier in Querrichtung, durch das Bauteil 22 erstreckt. Aufgrund der Harzzuführung über die Fließhilfe 18 wird das Harz im Bereich der Werkzeugoberfläche 24 gegenüber dem Harz im Bereich der Fließhilfe 18 leicht nachgeführt, so dass sich die Fließfront 26 nicht parallel zur Vertikalachse des Bauteils 22 ausbildet, sondern leicht angestellt orientiert ist.

Sobald, wie in Figur 6 gezeigt, das Harz im Bereich des Zusatzlaminates bzw. lokale Verstärkungslagen 6 über die Fließhilfe 18 zugeführt wird, wird die Harzverteilung im fließhilfefernen Grundlaminat 6 noch mehr verzögert, so dass die Fließfront 26 quasi in zwei, über einen Knick 14 voneinander getrennte Abschnitte 28, 30 unterteilt wird, wobei sich der grundlaminatenseitige Abschnitt 28 langsamer ausbreitet als der zusatzlaminatseitige Abschnitt 30, so dass sich die Fließfront 18 abschnittsweise mit stark unterschiedlichen Geschwindigkeiten durch das Bauteil 22 erstreckt.

Wenn das Matrixmaterial innerhalb der Fließhilfe 18 jedoch, wie in Figur 7 gezeigt, auf den im hinteren Bereich nahe eines Übergangs zum Grundlaminat 4 angeordneten Körperabschnitt 20 aufläuft, wird die Ausbreitung des zusatzlaminatseitigen Abschnitts 30 in Querrichtung verlangsamt und dadurch die Tränkung des Bauteils 22 in Dickenrichtung verbessert, wodurch die Ausbreitungsgeschwindigkeit des grundlaminatseitige Abschnitt 28 erhöht wird.

Sobald eine ausreichende Harmonisierung der beiden Fließfrontabschnitte 28, 30 beispielsweise über eine Einebnung bzw. eine nahezu Einebnung des Knickes 14 erreicht ist, löst sich gemäß Figur 8 die Barriere 20 durch das bereits seit einiger Zeit anliegende und in Querrichtung gestoppte Harz selbsttätig auf, so dass eine weitere Verteilung des Harzes in Querrichtung des Bauteils 22 durch das Grundlaminat 4 möglich wird, ohne dass die Gefahr von Porenfeldern (Fi.3, 16) innerhalb des Bauteils 22 besteht. Somit wird bei Verwendung der erfindungsgemäßen Fließhilfe 18 das Bauteil 22 vollständig und gleichmäßig mit dem Harz getränkt.

Offenbart ist ein Infusionsverfahren zur Herstellung eines faserverstärkten Verbundbauteils mit einer Fließhilfe 18, wobei mittels der Fließhilfe 18 die Fließgeschwindigkeit des Matrixmaterials in einem zu infiltrierenden Bauteil 22 verändert wird, sowie eine Fließhilfe 18, die einen integralen Körperabschnitt 20 zur Veränderung der Fließgeschwindigkeit aufweist.

### Bezugszeichenliste

- 2: Bauteil
- 4: Grundlaminat
- 6: Zusatzlaminat
- 8: Werkzeug
- 10: Fließhilfe
- 12: Fließfront
- 14: Knick
- 16: Porenfeld
- 18: Fließhilfe
- 20: Körperabschnitt
- 22: Bauteil
- 24: Werkzeugoberfläche
- 26: Fließfront
- 28: Abschnitt
- 30: Abschnitt

## Patentansprüche

1. Infusionsverfahren zur Herstellung eines faserverstärkten Verbundbauteils (22) mit einer Fließhilfe (18) zur Verteilung eines Matrixmaterials über das zu infiltrierende Verbundbauteil (22),
wobei die Fließgeschwindigkeit des Matrixmaterials innerhalb der Fließhilfe (18) zumindest abschnittsweise verändert wird, wobei die Fließhilfe (18) einen Körperabschnitt (20) aufweist, und mittels dem Köperabschnitt (20) die Fließgeschwindigkeit verändert wird; und
**dadurch gekennzeichnet, dass** der Körperabschnitt (20) nach einer bestimmten Zeit aufgelöst wird.

2. Infusionsverfahren nach Anspruch 1, wobei die Fließgeschwindigkeit im Bereich eines dickwandigen Bauteilabschnittes (6) verlangsamt wird.

3. Infusionsverfahren nach Anspruch 2, wobei die Fließgeschwindigkeit im hinteren Bereich des dickwandigen Bauteilabschnittes (6) verlangsamt wird.

4. Infusionsverfahren nach Anspruch 1, 2 oder 3, wobei das Matrixmaterial in der Fließhilfe (18) temporär gestoppt wird.

5. Infusionsverfahren nach Anspruch 1, wobei der Körperabschnitt (20) von dem Matrixmaterial aufgelöst wird.

6. Infusionsverfahren nach Anspruch 1, wobei der Körperabschnitt (20) durch Bestrahlung aufgelöst wird.

7. Infusionsverfahren nach Anspruch 1, wobei die Auflösung des Körperabschnitts (20) durch Bestrahlung initiiert und dann durch das Matrixmaterial fortgeführt wird.

8. Fließhilfe (18) für ein Infusionsverfahren zur Verteilung eines Matrixmaterials über eine Oberfläche eines zu infiltrierenden Bauteils (22), wobei zumindest ein Körperabschnitt (20) zur Veränderung der Fließgeschwindigkeit des Matrixmaterials innerhalb der Fließhilfe (18) vorhanden ist;
**dadurch gekennzeichnet, dass** der Körperabschnitt (20) nach einer bestimmten Zeit auflösbar ist.

9. Fließhilfe nach Anspruch 8, wobei der Körperabschnitt (20) von Fäden gebildet ist, die beispielsweise aus einem Kunststoff der Gruppe Polyethersulfon (PES) hergestellt sind.

## Claims

1. Infusion method for producing a fibre-reinforced composite component (22) with a flow aid (18) for distributing a matrix material over the composite component (22) to be infiltrated, wherein
the flow rate of the matrix material is changed within the flow aid (18), at least in some sections, wherein the flow aid (18) comprises a body section (20) and the flow rate is changed by means of the body section (20); and **characterized in that**
the body section (20) is dissolved after a certain time.

2. Infusion method according to Claim 1, wherein the flow rate is slowed in the region of a thick-walled component section (6).

3. Infusion method according to Claim 2, wherein the flow rate is slowed in the rear region of the thick-walled component section (6).

4. Infusion method according to Claim 1, 2 or 3, wherein the matrix material is temporarily stopped in the flow aid (18).

5. Infusion method according to Claim 1, wherein the body section (20) is dissolved by the matrix material.

6. Infusion method according to Claim 1, wherein the body section (20) is dissolved by irradiation.

7. Infusion method according to Claim 1, wherein the dissolution of the body section (20) is initiated by irradiation and is then continued by the matrix material.

8. Flow aid (18) for an infusion method for distributing a matrix material over a surface of a component to be infiltrated (22), wherein there is at least one body section (20) for changing the flow rate of the matrix material within the flow aid (18); **characterized in that**
the body section (20) is dissolvable after a certain time.

9. Flow aid according to Claim 8, wherein the body section (20) is formed by filaments, which are produced for example from a plastic of the polyethersulfone (PES) group.

## Revendications

1. Procédé d'infusion pour la fabrication d'un composant composite renforcé par des fibres (22) avec un élément facilitant l'écoulement (18) pour la distribution d'un matériau de matrice sur le composant composite à infiltrer (22), dans lequel on fait varier au moins localement la vitesse d'écoulement du matériau de matrice à l'intérieur de l'élément facilitant l'écoulement (18), dans lequel l'élément facilitant l'écoulement (18) présente une partie de corps (20), et on fait varier la vitesse d'écoulement au moyen de la partie de corps (20); et **caractérisé en ce que** l'on dissout la partie de corps (20) après un temps déterminé.

2. Procédé d'infusion selon la revendication 1, dans lequel on diminue la vitesse d'écoulement dans la région d'une partie de composant à paroi épaisse (6).

3. Procédé d'infusion selon la revendication 2, dans lequel on diminue la vitesse d'écoulement dans la région arrière de la partie de composant à paroi épaisse (6).

4. Procédé d'infusion selon la revendication 1, 2 ou 3, dans lequel on arrête temporairement le matériau de matrice dans l'élément facilitant l'écoulement (18).

5. Procédé d'infusion selon la revendication 1, dans lequel on dissout la partie de corps (20) par le matériau de matrice.

6. Procédé d'infusion selon la revendication 1, dans lequel on dissout la partie de corps (20) par irradiation.

7. Procédé d'infusion selon la revendication 1, dans lequel on commence la dissolution de la partie de corps (20) par irradiation et on la poursuit ensuite au moyen du matériau de matrice.

8. Elément facilitant l'écoulement (18) pour un procédé d'infusion permettant la distribution d'un matériau de matrice sur une surface d'un composant à infiltrer (22), dans lequel il se trouve une partie de corps (20) pour faire varier la vitesse d'écoulement du matériau de matrice à l'intérieur de l'élément facilitant l'écoulement (18), **caractérisé en ce que** la partie de corps (20) peut être dissoute après un temps déterminé.

9. Elément facilitant l'écoulement selon la revendication 8, dans lequel la partie de corps (20) est formée par des fils, qui sont fabriqués par exemple en une matière plastique du groupe polyéthersulfone (PES).
